# EUROPEAN PATENT SPECIFICATION

(11) **EP 1 795 403 B1**
(45) Date of publication and mention of the grant of the patent: **08.09.2010**
(21) Application number: 06077120.1
(22) Date of filing: 28.11.2006
(51) Int. Cl.: B60R 21/013, B60R 21/34, B60R 19/40

(54) **Situationally dependent vehicle structure for pedestrian protection**
Situationsabhängige Fahrzeugstruktur zum Fußgängerschutz
Oscillateur avec fréquence contrôlée par tension pour la détection de la position de rotor

(30) Priority: 06.12.2005 US 295740
(43) Date of publication of application: 13.06.2007
(73) Proprietor: Delphi Technologies, Inc., Troy, Michigan 48007 (US)
(72) Inventor: Murphy, Morgan D., Kokomo, IN 46901 (US)
(74) Representative: Denton, Michael John

(56) References cited:
- EP-A- 1 681 213
- DE-A1- 10 159 864
- GB-A- 2 400 353
- US-A1- 2002 169 533
- US-A1- 2004 215 382
- US-A1- 2005 150 704

## Description

### TECHNICAL FIELD

The present invention relates generally to pedestrian safety systems for motor vehicles and, more particularly, to a situationally dependent vehicle structure which is configured to be modified in response to a detected vehicle condition.

### BACKGROUND OF THE INVENTION

When a moving vehicle strikes an obstacle, the obstacle often first hits the front bumper of the vehicle and then travels up over the bumper and lands on the hood. As such, the obstacle impacts both the bumper and the hood of the vehicle.

It is known in the art to provide impact sensing systems configured to detect an imminent impact and modify the bumper and/or hood of a vehicle to reduce the potential injury to a struck pedestrian. More particularly, the structure of the bumper may be modified in response to a detected imminent impact with an object. It is also known to raise the vehicle hood to provide a gap between the hood and the engine compartment thereby increasing the cushioning effect of the hood when imminent impact with an object is detected.

Bumpers have also been developed with additional cushion to reduce damaging impact with pedestrians. One problem with such a modified bumper design is that it tends to increase the repair costs resulting from low speed impacts. In general, a vehicle structure that is more pedestrian friendly often conflicts with other customer requirements, such as styling, high speed aerodynamics, and increase bumper durability.

DE-A-10 159 864 discloses a system in accordance with the preamble of claim 1.

### SUMMARY OF THE INVENTION

According to an illustrative embodiment of the present disclosure, a

pedestrian safety system for a motor vehicle includes a situationally dependent structure, and a sensor configured to detect the location of the vehicle. A controller is in communication with the sensor and is configured to cause selected modification of the situationally dependent structure in response to the detected vehicle location, wherein the controller is configured to determine if the vehicle is in a high pedestrian contact zone, and to modify the situationally dependent structure if the vehicle is in the high pedestrian contact zone.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
Figure 1 is a block diagram of an illustrative embodiment pedestrian safety system of the present disclosure;
Figure 2 is a partial perspective view of a vehicle including the pedestrian safety system of Figure 1, with cutaways to show details thereof;
Figure 3 is a partial top plan view, in partial schematic, of a bumper according to the pedestrian safety system of Figure 1, illustrating the bumper in a rigid mode;
Figure 4 is a top plan view similar to Figure 3, illustrating the bumper in a spring mode;
Figure 5 is a partial side elevation view illustrating the front of the vehicle incorporating the pedestrian safety system of Figure 1;
Figure 6 is a flow chart illustrating a method of operation of the pedestrian safety system of Figure 1; and
Figure 7 is a partial schematic view illustrating the vehicle incorporating the pedestrian safety system of Figure 1 travelling through a high pedestrian contact zone.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention in several forms and such exemplification is not to be construed as limiting the scope of the invention in any manner.

### DESCRIPTION OF THE PREFERRED EMBODIMENTS

The embodiments discussed below are not intended to be exhaustive or limit the invention to the precise forms disclosed in the following detailed description. Rather, the embodiments are chosen and described so that others skilled in the art may utilize their teachings.

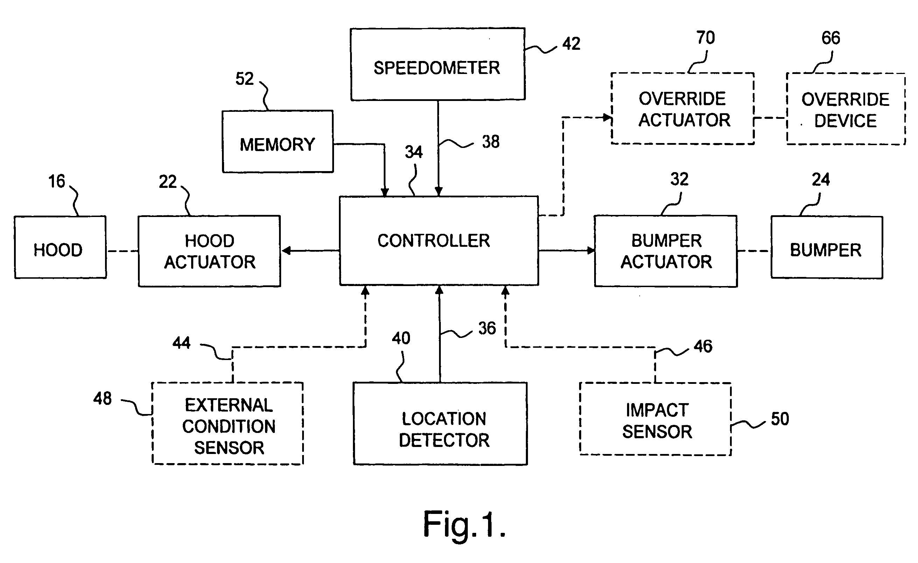

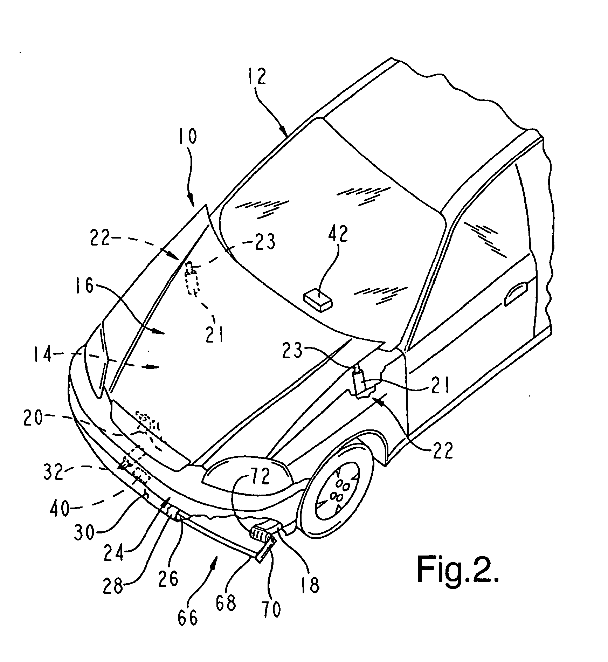

Referring initially to Figures 1 and 2, a pedestrian safety system 10 is shown for use within a motor vehicle 12. The vehicle 12 is of conventional design and includes an engine compartment 14 covered by a hood 16. The hood 16 may be supported for pivoting movement in the manner known in the art. A front part of the hood 16 may be secured relative to the body frame 18 through a conventional latch 20. Right and left hood actuators 22 are operably coupled to the hood 16 and are configured to raise and lower the hood relative to the engine compartment 14 between deployed and rest modes. The actuators 22 may be of conventional design, and each illustratively comprises an electric motor 21 configured to move a drive element 23.

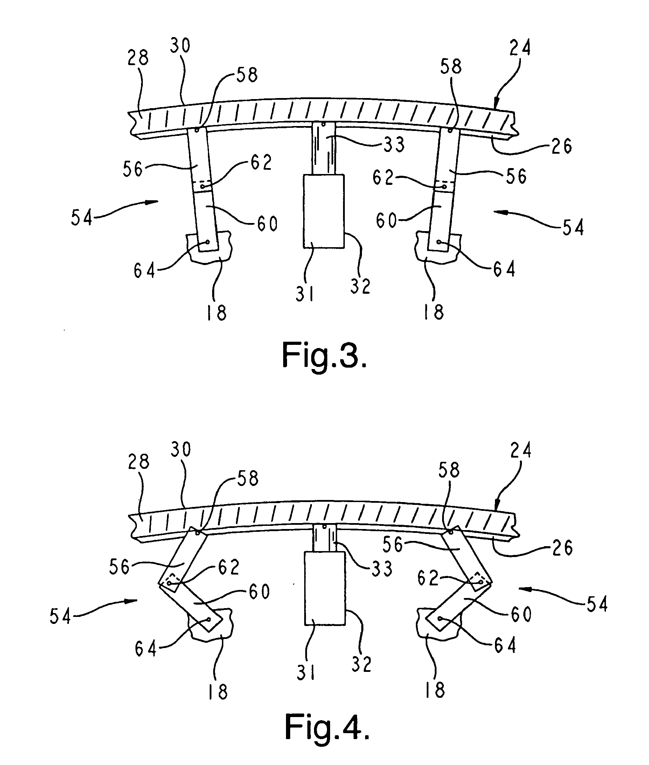

With reference to Figs. 2 and 3, the vehicle 12 also includes a front bumper 24 illustratively having a support beam 26 which is coupled to an energy absorbent foam material 28. The exterior face of the bumper 24 is illustratively covered by a facia 30. A bumper actuator 32 is operably coupled to the bumper 24 and is configured to move the bumper 24 forwardly and rearwardly between deployed and rest modes. The actuator 32 may be of conventional design and illustratively comprises an electric motor 31 configured to move a drive element 33.

With further reference to Figure 1, the pedestrian safety system 10 includes a controller 34, illustratively a microprocessor, which is configured to make a deployment decision regarding the situationally dependent vehicle structure (for example, the hood 16 or the bumper 24) based upon a detected vehicle condition. More particularly, the controller 34 is configured to receive input signals 36 and 38 from vehicle condition sensors, illustratively a location detector 40 and a speedometer 42, respectively. The location detector 40 is configured to provide a signal 36 indicative of the vehicle location, while the speedometer 42 is configured to provide a signal 38 indicative of the vehicle speed. Illustratively, the location detector 40 may comprise a global positioning system (GPS) sensor, while the speedometer may comprise a conventional vehicle speed detector. Input signals 44 and 46 may also be provided by additional vehicle condition sensors, such as an external condition sensor 48 and an impact sensor 50, respectively.

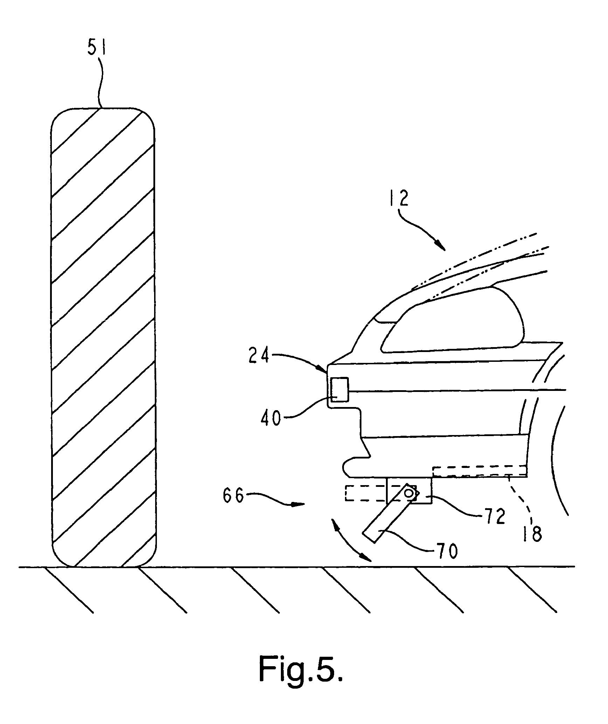

The external condition sensor 48 may be used to detect objects 51 (Fig. 5) within the vehicle's path. The external condition sensor 48 may comprise a camera, infrared sensor, radar or other similar device. Input from the external condition sensor 48 may be used to supplement the configuration deployment decision made by the controller 34. For example, the distance to a leading vehicle in front of the sensor 48 in combination with the vehicle speed may be used by the controller 34 to determine an appropriate deployment of the hood 16 and/or the bumper 24. Moreover, distance to the next vehicle and vehicle speed may be used to eliminate deployment in situations where a pedestrian is unlikely to enter the space between the vehicles. The impact sensor 50 may comprise an acceleration sensor which is configured to detect an imminent collision and to provide a corresponding signal to the controller.

The controller 34 is configured to control operation of the hood actuators 22 and the bumper actuator 32 in response to the detected vehicle conditions of location and speed, as indicated by the input signals 36 and 38. In one illustrative embodiment, the location detector 40 provides input of vehicle location to the controller 34 which, in turn, determines the likelihood of pedestrian contact. For example, the controller 34 will determine whether the vehicle location is in a high pedestrian contact zone. Such a high pedestrian contact zone may be stored within a memory 52 and supplied to the controller 34. Illustratively, such a high pedestrian contact zone may be a neighbourhood where there is increased pedestrian traffic. In contrast, a remote highway would be given a lower likelihood of contact and not classified as a high pedestrian contact zone. Based upon the level of pedestrian contact anticipated, the controller 34 will make a decision as to whether to deploy, or enable a structural modification of, the hood 16 or bumper 24.

In a further illustrative embodiment, vehicle speed may also be considered in the deployment decision. At low speeds, illustratively less than eight miles per hour, and at high speeds, illustratively greater than twenty-five miles per hour, no changes in structure would be required by the controller 34. Average speed over a relatively short period of time is used by the controller 34 in its decision making process. In some areas, for example large areas within cities, the system 10 could be locked into a pedestrian friendly configuration. In other words, the controller 34 would maintain the structures 16 and 24 in rest modes.

By activating the hood actuators 22, the vehicle hood 16 is raised, illustratively by approximately two inches. This implementation allows for styling requirements which are primary concerns at low speeds, and for aerodynamic requirements which are primary concerns at higher speeds. At intermediate speeds, the hood 22 is elevated above the engine compartment 14 to provide additional cushioning effect for the pedestrian. In the illustrative embodiment, the controller actuates the actuators 22 to raise the hood 16 only when the detected speed is between 8 and 25 miles per hour. It may be appreciated that this speed range may vary depending upon structural details and environmental conditions.

In order to minimize pedestrian leg injuries, several options are available to stiffen or soften the contact surface of the bumper 24. Utilizing magnetically or mechanically activated bi-stable devices, the structure of the bumper 24 can be made more rigid. As shown in Figures 3 and 4, in an illustrative embodiment, the bumper 24 is operably coupled to a pair of linkages 54. Each linkage 54 includes a first arm 56 operably coupled to the vehicle frame 18 through a first pivot 58, and a second arm 60 operably coupled to the first arm 56 and to the beam 26 through second and third pivots 62 and 64, respectively. During a rigid mode of operation as shown in Figure 3, the bumper 24 has a column configuration which is significantly stiffer because load is transferred through the column structure instead of through the foam material 28. Such a column configuration will reduce vehicle damage at lower speeds. In a spring mode of operation as shown in Figure 4, the load is more readily transferred through the foam material 28 to create a softer contact surface that better reduces pedestrian leg injuries. Operation of the bumper actuator 32 moves the bumper 24 between the rigid and spring modes of operation. Other means to change the rigidity of the bumper 24 may include air pressure or other fluid systems. In addition to bumper rigidity, for some vehicles it would be beneficial to extend the bumper 24 two to three inches to reduce pedestrian leg injuries.

As shown in Figure 5, for certain vehicles an override device 66 may be deployed. The override device 66 illustratively includes a lateral member 68 which is deployable from a raised position to a lowered position. A pair of legs 70 are pivotally supported and configured to be moved by an override actuator 72, illustratively an electric motor. In the lowered position, the override device 66 forms a barrier to prevent a pedestrian from being driven over by the vehicle 12.

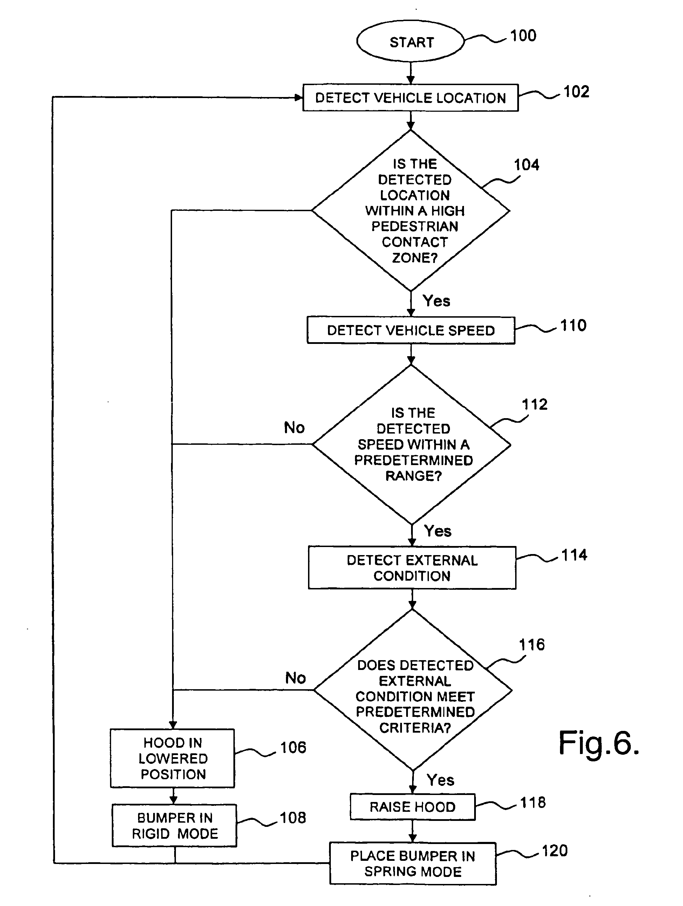

With reference now to Figure 6, illustrative operation of the pedestrian safety system 10 begins at block 100. At block 102 the location detector 40 detects the vehicle location. At block 104, controller 34 determines whether the detected location is within a high pedestrian contact zone. If not, then the hood 16 remains in its lowered or rest position, as indicated by block 106, and the bumper 24 is in its rigid or rest mode, as indicated by block 108. Returning to block 104, if the detected location is within a high pedestrian contact zone, then the vehicle speed is detected at block 110. At block 112, the controller 34 determines whether the detected speed is within a predetermined range. Illustratively, the predetermined range is between eight and twenty-five miles per hour. If the detected speed is not within the predetermined range, then the process continues to block 106 where the hood 16 is in its lowered position and to block 108 where the bumper 24 is in its rigid mode. If the detected speed is within the predetermined range, then the process continues to optional block 114 where external conditions are detected.

At optional block 116, the controller 34 determines whether the external conditions meet predetermined criteria. For example, the external condition may be the distance to object 51 in front of the vehicle 12. Illustratively, based upon the detected speed and the distance to a leading vehicle, the controller 34 may determine that it is unlikely the pedestrian would get between the vehicles. As such, if the predetermined criteria is not met (for example, the distance is less than a predetermined amount), then the process continues to block 106 where the hood 16 is in its lowered position, and to block 108 where the bumper 24 is in its rigid mode. If the predetermined condition is met, then the process continues to block 118, where the hood 16 is raised or deployed, and to block 120 where the bumper 24 is deployed to its spring mode of operation. The process then returns to block 102 where the vehicle location is detected and the steps continue in the manner identified above.

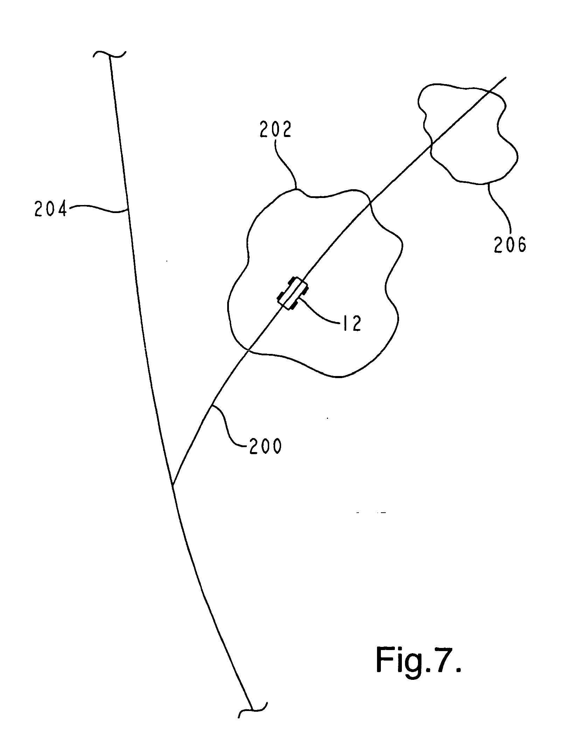

Figure 7 shows a vehicle 12 travelling along a road 200 through a first high pedestrian contact zone 202. If the vehicle 12 is travelling along road 204, the controller 34 identifies this as a low pedestrian contact zone. As such, the controller 34 would not cause the hood 16 or the bumper 24 to deploy. As the car travels along road 200 and enters the first high pedestrian zone 202, the controller 34 causes the bumper 24 and the hood 16 to deploy if the vehicle speed is within the predetermined range. As the vehicle 12 travels out of the first high pedestrian contact zone 202 on its way to a second high pedestrian contact zone 206, the controller 34 causes the actuators 22 and 32 to deactivate and return the hood 16 and bumper 24 to their rest modes. Once the vehicle 12 enters the second high pedestrian contact zone 206, the controller 34 again causes the bumper 24 and the hood 16 to deploy if the vehicle speed is within the predetermined range.

## Claims

1. A pedestrian safety system (10) for a motor vehicle (12), the pedestrian safety system (10) comprising:
a situationally dependent structure (16, 24); **characterized by** a sensor (40) configured to detect the location of the vehicle (12); and
a controller (34) in communication with the sensor (46) and configured to cause selective modification of the situationally dependent structure (16, 24) in response to the detected vehicle location; wherein the controller (34) is configured to determine if the vehicle (12) is in a high pedestrian contact zone, and to modify the situationally dependent structure (16, 24) if the vehicle is in the high pedestrian contact zone.

2. The pedestrian safety (10) system of claim 1, wherein the situationally dependent structure comprises a bumper (24) positioned in front of an engine compartment (14); and
a bumper actuator (32) operably coupled to the bumper (24), the bumper actuator (32) being configured to modify the stiffness of the bumper (24).

3. The pedestrian safety system (10) of claim 2, wherein the bumper (24) includes a support beam (26) and a linkage (54) pivotably coupled to the support beam (26), the support beam (26) being configured to operate in a rigid mode to stiffen the bumper (24) and to operate in a spring mode to soften the bumper (24).

4. The pedestrian safety system (10) of claim 1, wherein the situationally dependent structure comprises a hood (16) positioned above an engine compartment (14); and
a hood actuator (22) operably coupled to the hood (16), the hood actuator (22) being configured to vertically move the hood (16) relative to the engine compartment (14).

5. The pedestrian safety system (10) of claim 1, wherein the sensor (40) comprises a global positioning system detector.

6. The pedestrian safety system (10) of claim 1, further comprising an actuator (22, 32) operably coupled to the situationally dependent structure and configured to be controlled by the controller (34).

7. The pedestrian safety system (10) of claim 1, further comprising an external condition sensor (48) configured to detect the position of the vehicle (12) relative to an external object (51).

8. The pedestrian safety system (10) of claim 1, further comprising an override device (66), wherein the controller (34) is configured to cause the override device (66) to vertically move in response to the detected vehicle location.

9. The pedestrian safety system (10) of claim 1, further comprising a speedometer (42) in communication with the controller (34) and configured to detect the speed of the vehicle (12), the controller (34) being configured to cause selective modification of the situationally dependent structure (16, 24) in response to the detected vehicle speed.

10. The pedestrian safety system (10) of claim 1, further comprising an external condition sensor (48) configured to detect the position of the vehicle (12) relative to an external object (51).

11. The pedestrian safety system (10) of claim 1, further comprising an override device (66) supported by the bumper (24), wherein the controller (34) is configured to cause the override device (66) to move vertically in response to the detected vehicle condition.

## Patentansprüche

1. Fußgängersicherheitssystem (10) für ein Kraftfahrzeug (12), wobei das Fußgängersicherheitssystem (10) aufweist:
eine situationsabhängige Struktur (16, 24); die **gekennzeichnet ist durch** einen Sensor (40), der konfiguriert ist, die Position des Fahrzeugs (12) zu erfassen; und
eine Steuervorrichtung (34) in Kommunikation mit dem Sensor (46) und konfiguriert, eine selektive Modifikation der situationsabhängigen Struktur (16, 24) in Reaktion auf die erfasste Fahrzeugposition zu veranlassen; wobei die Steuervorrichtung (34) konfiguriert ist, zu bestimmen, ob das Fahrzeug (12) in einer Zone mit hohem Fußgängerkontakt ist, und die situationsabhängige Struktur (16, 24) zu modifizieren, wenn das Fahrzeug in der Zone mit hohem Fußgängerkontakt ist.

2. Fußgängersicherheitssystem (10) gemäß Anspruch 1, wobei die situationsabhängige Struktur eine Stoßstange (24) aufweist, die sich vor einem Motorraum (14) befindet; und
einen Stoßstangen-Aktuator (32), der betriebsfähig mit der Stoßstange (24) verbunden ist, wobei der Stoßstangen-Aktuator (32) konfiguriert ist, die Steifheit der Stoßstange (24) zu modifizieren.

3. Fußgängersicherheitssystem (10) gemäß Anspruch 2, wobei die Stoßstange (24) einen Halteträger (26) und ein Gestänge (54) umfasst, das schwenkbar mit dem Halteträger (26) verbunden ist, wobei der Halteträger (26) konfiguriert ist, in einem steifen Modus zu arbeiten, um die Stoßstange (24) zu versteifen, und in einem Feder-Modus zu arbeiten, um die Stoßstange (24) nachgiebig zu machen.

4. Fußgängersicherheitssystem (10) gemäß Anspruch 1, wobei die situationsabhängige Struktur eine Motorhaube (16) aufweist, die sich über einem Motorraum (14) befindet; und
einen Motorhaube-Aktuator (22), der betriebsfähig mit der Motorhaube (16) verbunden ist, wobei der Motorhaube-Aktuator (22) konfiguriert ist, die Motorhaube (16) vertikal relativ zu dem Motorraum (14) zu bewegen.

5. Fußgängersicherheitssystem (10) gemäß Anspruch 1, wobei der Sensor (40) einen GPS(Global Positioning System)-Detektor aufweist.

6. Fußgängersicherheitssystem (10) gemäß Anspruch 1, das weiter einen Aktuator (22, 32) aufweist, der betriebsfähig mit der situationsabhängigen Struktur verbunden ist und konfiguriert ist, durch die Steuervorrichtung (34) gesteuert zu werden.

7. Fußgängersicherheitssystem (10) gemäß Anspruch 1, das weiter einen "externer Zustand"-Sensor (48) aufweist, der konfiguriert ist, die Position des Fahrzeugs (12) relativ zu einem externen Objekt (51) zu erfassen.

8. Fußgängersicherheitssystem (10) gemäß Anspruch 1, das weiter eine Eingriff-Vorrichtung (66) aufweist, wobei die Steuervorrichtung (34) konfiguriert ist, zu veranlassen, dass sich die Eingriff-Vorrichtung (66) vertikal bewegt in Reaktion auf die erfasste Fahrzeugposition.

9. Fußgängersicherheitssystem (10) gemäß Anspruch 1, das weiter aufweist einen Geschwindigkeitsmesser (42) in Kommunikation mit der Steuervorrichtung (34) und konfiguriert, die Geschwindigkeit des Fahrzeugs (12) zu erfassen, wobei die Steuervorrichtung (34) konfiguriert ist, eine selektive Modifikation der situationsabhängigen Struktur (16, 24) in Reaktion auf die erfasste Fahrzeuggeschwindigkeit zu veranlassen.

10. Fußgängersicherheitssystem (10) gemäß Anspruch 1, das weiter einen "externer Zustand"-Sensor (48) aufweist, der konfiguriert ist, die Position des Fahrzeugs (12) relativ zu einem externen Objekt (51) zu erfassen.

11. Fußgängersicherheitssystem (10) gemäß Anspruch 1, das weiter eine Eingriff-Vorrichtung (66) aufweist, die von der Stoßstange (24) getragen wird, wobei die Steuervorrichtung (34) konfiguriert ist, zu veranlassen, dass sich die Eingriff-Vorrichtung (66) vertikal bewegt in Reaktion auf den erfassten Fahrzeugzustand.

## Revendications

1. Système de sécurité pour piétons (10) pour un véhicule à moteur (12), le système de sécurité pour piétons (10) comprenant :
une structure dépendante de la situation (16, 24), **caractérisé par** un capteur (40) configuré pour détecter l'emplacement du véhicule (12) ; et
un contrôleur (34) en communication avec le capteur (46) configuré pour provoquer une modification sélective de la structure dépendante de la situation (16, 24) en réponse à l'emplacement détecté du véhicule ; dans lequel le contrôleur (34) est configuré pour déterminer si le véhicule (12) est dans une zone de contact de piétons haute, et pour modifier la structure dépendante de la situation (16, 24) si le véhicule est dans la zone de contact de piétons haute.

2. Système de sécurité pour piétons (10) selon la revendication 1, dans lequel la structure dépendante de la situation comprend un pare-chocs (24) positionné en avant d'un compartiment moteur (14) ; et
un actionneur de pare-chocs (32) fonctionnellement couplé au pare-chocs (24), l'actionneur de pare-chocs (32) étant configuré pour modifier la raideur du pare-chocs (24).

3. Système de sécurité pour piétons (10) selon la revendication 2, dans lequel le pare-chocs (24) inclut une poutre support (26) et une tringlerie (54) couplée en pivotement à la poutre-support (26), la poutre-support (26) étant configurée pour fonctionner dans un mode rigide afin de raidir le pare-chocs (24) et pour fonctionner dans un mode ressort pour assouplir le pare-chocs (24).

4. Système de sécurité pour piétons (10) selon la revendication 1, dans lequel la structure dépendante de la situation comprend un capot (16) positionné au-dessus d'un compartiment moteur (14) ; et
un actionneur de capot (22) fonctionnellement couplé au capot (16), l'actionneur de capot (22) étant configuré pour déplacer verticalement le capot (16) par rapport au compartiment moteur (14).

5. Système de sécurité pour piétons (10) selon la revendication 1, dans lequel le capteur (40) comprend un détecteur du système de positionnement global.

6. Système de sécurité pour piétons (10) selon la revendication 1, comprenant en outre un actionneur (22, 32) fonctionnellement couplé à la structure dépendante de la situation et configuré pour être commandé par le contrôleur (34).

7. Système de sécurité pour piétons (10) selon la revendication 1, comprenant en outre un capteur de condition externe (48) configuré pour détecter la position du véhicule (12) par rapport à un objet externe (51).

8. Système de sécurité pour piétons (10) selon la revendication 1, comprenant en outre un dispositif de levage (66), dans lequel le contrôleur (34) est configuré pour amener le dispositif de levage (66) à se déplacer verticalement en réponse à l'emplacement détecté du véhicule.

9. Système de sécurité pour piétons (10) selon la revendication 1, comprenant en outre un détecteur de vitesse (42) en communication avec le contrôleur (34) et configuré pour détecter la vitesse du véhicule (12), le contrôleur (34) étant configuré pour provoquer une modification sélective de la structure dépendante de la situation (16, 24) en réponse à la vitesse détectée du véhicule.

10. Système de sécurité pour piétons (10) selon la revendication 1, comprenant en outre un capteur de condition externe (48) configuré pour détecter la position du véhicule (12) par rapport à un objet externe (51).

11. Système de sécurité pour piétons (10) selon la revendication 1, comprenant en outre un dispositif de levage (66) supporte par le pare-chocs (24), dans lequel le contrôleur (34) est configuré pour amener le dispositif de levage (66) un se déplacer verticalement en réponse à la condition détectée du véhicule.
